# EUROPEAN PATENT APPLICATION

(11) **EP 4 847 819 A1**
(43) Date of publication of application: **02.12.2026**
(21) Application number: 25178980.6
(22) Date of filing: 27.05.2025
(51) Int. Cl.: F16L 23/10, F16L 17/04, F16L 21/06

(54) **CLAMP CONNECTOR FOR CLAMPING TWO CONNECTED PIPES**

(71) Applicant: Minimax Viking Patent Management GmbH, 23840 Bad Oldesloe (DE)
(72) Inventor: Hochschild, Marcus, 23840 Bad Oldesloe (DE)
(74) Representative: Eisenführ Speiser

(57) **Abstract**

The invention relates to a clamp connector comprising two clamp ring component. The first clamp ring component is provided an open mounting space between two stress structures. The second clamp ring component is provided with a fixing structure (211) comprising an inserting component (212) and a limiting mechanism (213) having a first and second flat surface (218, 219). The limiting mechanism (213) has a radially inwards facing rear portion (222) and a top portion with an circumferential edge (227) adjacent the inserting component (212). When the clamp connector forms a ring, the inserting component (212) is placed in the open mounting space and the top portion (223) touches the two stress structures, wherein the inserting component (212) engulfs at least one side, preferably two sides, of the circumferential edge (227) to engage both the rear portion and the top portion between the first surface (218) and the second surface (219).

## Description

### TECHNICAL FIELD

The present disclosure relates to the technical field of pipe connecting clamps, in particular to a clamp connector for clamping two connected pipes, and a connecting component including the clamp connector.

### BACKGROUND

This invention concerns segmented mechanical couplings for joining two pipe elements with one conventional assembly point as bolt and nut and a locking mechanism as the second assembly point. In comparison to couplings with two conventional assembly points, there is an advantage in manual labor speed and accessibility. Further only one person is required to assemble these couplings, particularly in confined spaces.

Couplings with one conventional coupling point are known in the art, as US Pat. No. 5018768 shows. They are formed by a pair of semicircular components which provides an arrangement for rapid hinging. Two adjacent ends of the semicircular components are connected to each other by means of a hook and loop hinge arrangement. This permits the components to be stored and handled separately and assembled whenever desired. The hook and loop hinge arrangement has structural weakpoints, in addition to the hook needs to be hinged in advance to assemble with the pipe segments.

For example, U.S. Pat. No. 11402040 discloses a one-bolt clamp connector optimized for efficient manufacturing processes, having two sealing rings with a first pair of ends to be interlocked, and a second pair of ends to be fixed together using a screw connection. The interlocking mechanism between corresponding ends of the sealing rings is formed by a fixing structure with a terminal limiting mechanism having a top portion and being inserted into an open mounting space between two stress structures, the two stress structures contact the limiting mechanism at a contact surface of the top portion to lock the coupling. The top portion has a circumferential edge which surrounds the contact surface. The fixing structure further consists of a solid base portion that is connected to the limiting mechanism via an inserting component adjacent to the circumferential edge. The two sealing rings further have reinforced patches on their outer sides covering parts of the connection to the first and second pair of ends and parts of the ring centers.

For use in typical applications, normative and regulatory requirements demand that coupling components are tested against bending loads and pipe pressure loads individually. For bending load tests, two predefined pipe segments are coupled, one of the pipe segments is fixed and a vertical load is applied to the other pipe segment. For pipe pressure load tests, the two predefined pipe segments are coupled and the assembly is pressurized .

Applicant has identified the need to test a one-bolt coupling of the prior art against a combined bending and pipe pressure load for niche purpose applications. Failure of prior art couplings in passing the combined load tests indicate the need to further strengthen structural flexibility and/or stability. Applicant believes that there is a desire to provide a one-bolt clamp connector suitable for such high load applications.

### SUMMARY

The invention concerns a one-bolt coupling for joining pipe element designed for enhanced mechanical resilience. In an example embodiment of such a one bolt coupling, further called clamp connector, comprises a first clamp ring component and a second clamp ring component attached to one another and surrounding an accommodating cavity for retrieving and joining pipe elements. The first clamp ring component comprises a first clamp edge and a second clamp edge, which are formed by bending inward along a radial direction of the clamp connector. The second clamp ring component comprises a third clamp edge and a fourth clamp edge, the third clamp edge and the fourth clamp edge are formed in the same way as the first clamp edge and a second clamp edge. The clamp edges of the first clamp ring component and the second clamp ring component each form an annular surface that fixates the pipe elements when attached to another. To ensure the fixation both pipe elements are provided with circumferential grooves to adjust the position of the clamp edges, such that the clamp edges rest in the circumferential grooves to ensure the rigid connection of both pipe elements.

The first clamp ring component comprises of a first end portion and a second end portion. The second clamp ring component comprises of a third end portion and a fourth end portion. When both clamp ring components are attached to one another, the first end portion is locked to the third end portion and the second end portion is locked to the fourth end portion, by locking the clamp ring components they are pressed towards each other and further stabilize the pipe connection. In a preferred embodiment, the locking mechanism of the second end portion and the fourth end portion can comprise a bolt and nut. In further embodiments the locking mechanism can comprise a screw and a threaded hole, spring supported fasteners, bolt and pins or any other mechanical locking mechanism. The locking mechanism of the second end portion and fourth end portion is not in the scope of this invention. The third end portion comprises of two stress structures that are divided by an open mounting space and a fixing structure at the first end portion, forming the locking mechanism of the first end portion and third end portion. In order to lock the first end portion to the third end portion, the fixing structure is mounted in the open mounting space and fits with the two stress structures. In order to unlock first end portion from the third end portion, the fixing structure is dismounted from the open mounting space. The fixing structure comprises of a base portion, an inserting component and a limiting mechanism. In a locking state, the limiting mechanism locks to the two stress structures.

The base portion and the limiting mechanism are connected to each other by the inserting component. In a preferred embodiment the base portion, inserting component and limiting mechanism are formed as an integral structure. The width of the inserting component is less than the width of the open mounting space to be able to be inserted between the two stress structures. The limiting mechanism comprises a top portion, a rear portion and a front portion. The top portion faces in a tangential direction towards the base portion and comprises two flat surfaces and a circumferential edge surrounding it.

The rear portion faces in a radial direction towards the accommodating cavity and in an exemplary embodiment comprises two rear surfaces. The front portion faces away in radial direction from the accommodating cavity. The limiting mechanism is wider than the open mounting space in order to lock the first and second end portion. When the first clamp ring component and the second clamp ring component form a ring and the inserting component is placed inside the open mounting space. A first flat surface of the top portion touches one of the two stress structures, and a second surface of the top portion touches the other of the two stress structures. The flat surfaces of the top portion are flat surfaces that form flush surfaces with the surfaces touched at the stress structures, when the locking mechanism of the second end portion and fourth end portion press the first clamp ring component to the second clamp ring component.

In this invention the inserting component engulfs the circumferential edge to an extend such that it engages the top portion between the flat surfaces and rear portion. The circumferential edge surrounds the top portion, having a part facing in radial outwards direction and having part facing in radial inwards direction forming two opposing sides of the circumferential edge. In a further embodiment the circumferential edge have a part facing in axial outwards direction and having part facing in the opposite axial outwards direction forming two opposing sides. In a preferred embodiment the axial and radial facing sides of the circumferential edge merge or connect by having a curved outline.

In a preferred embodiment, the inserting component engages the rear portion between the rear surfaces. In a further embodiment the inserting component engulfs and / or covers the rear surfaces. The inserting component engulfs and / or covers at least half of the width of the top portion in radial outwards direction, in a preferred embodiment more than three quarters of the radial width and in an optimal embodiment the full width of the top portion in radial outwards direction. In these embodiments the inserting component engulfs at least one third of the radial inwards facing side of the circumferential edge. In a more preferred embodiment the inserting component engulfs at least half of the radial inwards facing side of the circumferential edge. In an optimal embodiment the inserting component additionally engages the front portion and engulfs at least one fourth of the radial outwards facing side of the circumferential edge. In a more preferred embodiment the inserting component engulfs at least one third of the radial outwards facing side of the circumferential edge. In an optimal embodiment the inserting component engulfs at least one-half of both the radial outwards and inwards facing sides of the circumferential edge. Accordingly, the preferred embodiment reduces the Problem of increased local stress breaking the fixing structure. The clamp connector is enabled to endure a significantly higher mechanical load by partial engulfing the circumferential edge. Further, the increased area of the inserting component engaging the limiting mechanism increases the resilience against static and dynamic loads of the whole fixing structure.

In a preferred embodiment the base portion can further have a relief recess that forms a recess in the base portion and forms the radial outwards surface into a U-shape. The relief recess in direct view towards the radial outwards surface has a trapezoid shape that increases its axial directed wideness in direction away from the limiting mechanism. The trapezoid form of the relief recess includes an angle in its axial wideness that ranges from 20° to 4°, in a more preferred embodiment from 6° to 12 ° and in the most preferred embodiment from 10° to 7°. Thus, the preferred embodiment increases the flexibility of the base portion and enables the material to divert stress in contrast to a solid base portion without the relief recess. This enables the Base Portion to divert more stress from the inserting element.

In a further preferred embodiment both stress structures have surfaces facing in tangential direction towards the second component. These surfaces form flush surfaces with the flat surfaces of the limiting mechanism in a locked state and the two stress structures form a U-shape with the open mounting space. In a preferred embodiment, the stress structures having each a concave strengthening portion that extends to the first clamp ring component. The concave strengthening portions each have a radius of 25% of the nominal diameter of the coupling to 60% of the diameter in a more preferred embodiment 45% to 30% of the diameter. Between the concave strengthening portions and the open mounting space is a recess of material, in a preferred embodiment formed by a fillet edge from the first end portion to the open mounting space. The preferred embodiment stabilizes the area of the stress structures ranging to the first clamp ring component and reduces the angle of the connection edge directing the stress flow more towards a curved direction instead of a tangential direction.

In a preferred embodiment the first clamp ring component comprises a first support edge and a second support edge protruding radially outwards between the first end portion and the second end portion. The concave strengthening portion extends each to the side related support edge and the first support edge and the second support edge are arranged parallel to each other and form a groove between them. In a similar matter, the second clamp ring component comprises a third support edge and a fourth support edge protruding radially outwards. The support edges of the first clamp ring component and the second clamp ring component in a preferred embodiment are formed in analogy to each other. The preferred embodiments support edges of the first clamp ring component and the second clamp ring component create a complementary stress reduction with the features mentioned above, by increasing the mass in the curved main body that takes the main stress flow from the end portions of the clamp ring components.

In a further embodiment, the inserting component enlarges in a radial direction from the base portion to the limiting mechanism. The inserting component comprises of a radially outwards facing angled surface that connects to a radial outwards front surface of the base portion. The angled surface and the front surface have an included angle that in this embodiment is between 175° to 120°. In a further preferred embodiment, this angle is from 170° to 140° and in a most preferred embodiment it ranges from 165° to 150°. In an exemplary embodiment the angled surface connects to the top portion between the two flat surfaces. In a further embodiment the angled surface connects to the front portion forming an overhang. In a further embodiment the angled surface is curved outwards and engages the top portion. The engaging angled surface covers less than half of the width of the front portion in tangential direction towards the base portion. In a further preferred embodiment the angled surface covers less than a quarter of the width of the front portion.

### BRIEF DESCRIPTION OF THE DRAWINGS

FIG. 1A is a structural schematic diagram showing a clamp connector of the present disclosure;
FIG. 1B is a another structural schematic diagram showing a clamp connector of the present disclosure;
FIG. 2A is a structural schematic diagram showing a first clamp ring component of the present disclosure;
FIG. 2B is another structural schematic diagram of the first clamp ring component of the present disclosure;
FIG. 3A is a structural schematic diagram showing a second clamp ring component of the present disclosure;
FIG. 3B is another structural schematic diagram of the second clamp ring component of the present disclosure;
FIG. 4 is another structural schematic diagram of the clamp connector of the present disclosure;
FIG. 5A is a structural schematic diagram showing a sealing component of the present disclosure;
FIG. 5B is another structural schematic diagram of the sealing component of the present disclosure;
FIG. 5C is yet another structural schematic diagram of the sealing component of the present disclosure;
FIG. 6 is a schematic diagram showing a connection between a sealing component and a clamp connector of the present disclosure;
FIG. 7A is a schematic diagram showing a mounting process of a pipe according to an embodiment of the present disclosure;
FIG. 7B is a schematic diagram showing a cooperation between a pipe and a connecting component according to an embodiment of the present disclosure; and
FIG. 7C is a schematic diagram showing a dismounting process of a pipe according to an embodiment of the present disclosure.
FIG. 8A is a structural schematic diagram showing a front view of the fixing structure of the present disclosure;
FIG. 8B is a structural schematic diagram showing a side view of the fixing structure of the present disclosure;
FIG. 8C is a structural schematic diagram showing an isometric view of the fixing structure of the present disclosure;
FIG. 8D is a structural schematic diagram showing a top view of the fixing structure of the present disclosure;
FIG. 8E is a structural schematic diagram showing a rear view of the fixing structure of the present disclosure;
FIG. 9A is a structural schematic diagram showing a front view of the fixing structure in an alternative embodiment of the present disclosure;
FIG. 9B is a structural schematic diagram showing a side view of the fixing structure in an alternative embodiment of the present disclosure;
FIG. 9C is a structural schematic diagram showing an isometric view of the fixing structure in an alternative embodiment of the present disclosure;
FIG. 9D is a structural schematic diagram showing a top view of the fixing structure in an alternative embodiment of the present disclosure;
FIG. 9E is a structural schematic diagram showing a rear view of the fixing structure in an alternative embodiment of the present disclosure;
FIG. 10A is a structural schematic diagram showing a side view of the stress structures of the present disclosure;
FIG. 10 B is a structural schematic diagram showing a front view of the stress structures of the present disclosure;
FIG. 10 C is a structural schematic diagram showing a top view of the stress structures of the present disclosure;
FIG. 10 D is a structural schematic diagram showing an isometric view of the stress structures of the present disclosure;

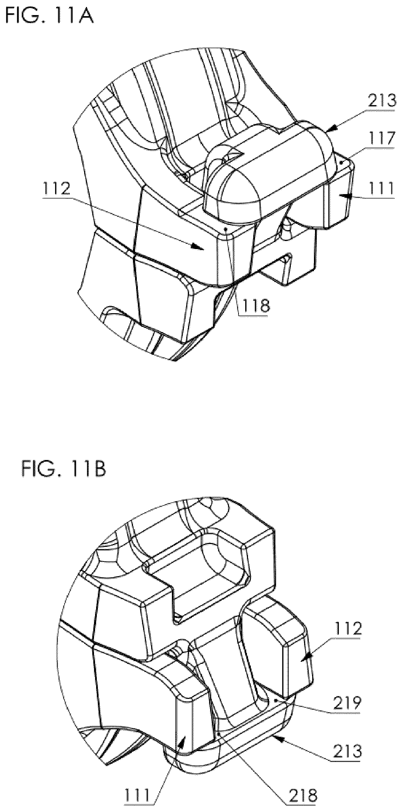

FIG. 11A is a structural schematic diagram showing a isometric view of the stress structures in the locked state of the present disclosure;
FIG. 11B is a structural schematic diagram showing a front view of the fixing structure in the locked state of the present disclosure;

### DETAILED DESCRIPTION OF THE EMBODIMENTS

In order to clearly and definitely illustrate the objective, technical solutions, and advantages of the present disclosure, the present disclosure will be described in detail hereinafter with reference to the drawings and embodiments. It should be understood that the specific embodiments described herein are merely used for explaining the present disclosure, rather than limiting the present disclosure.

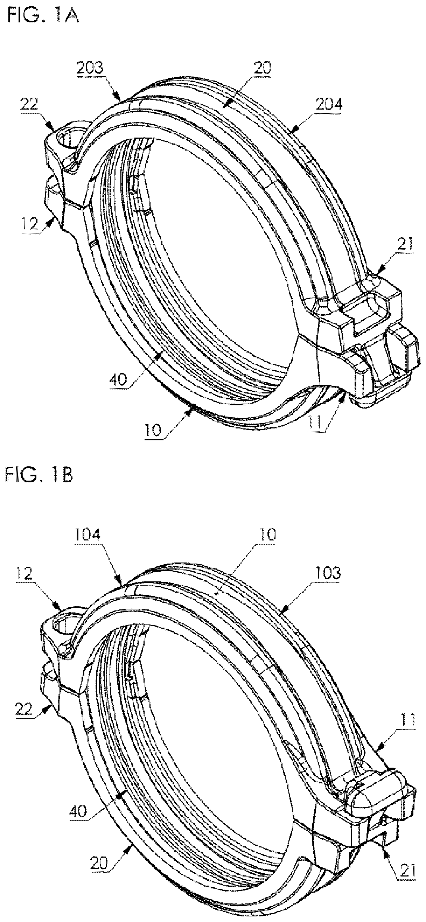

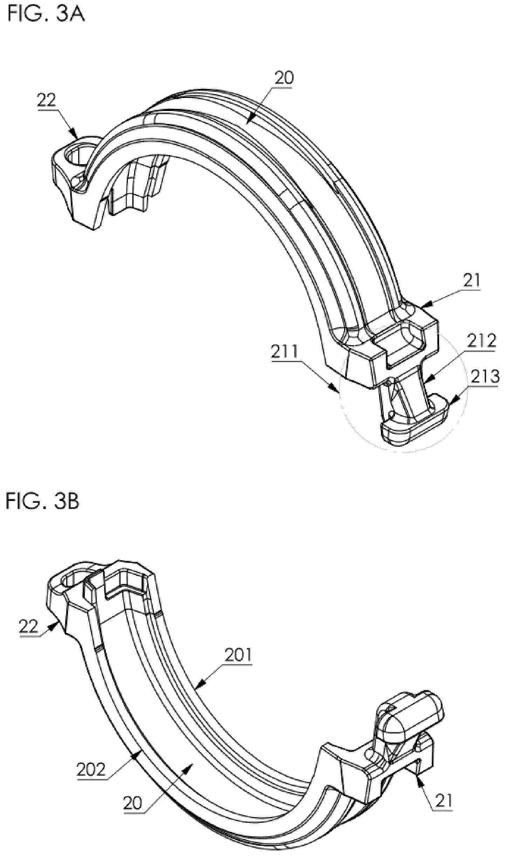

As shown in FIG. 1-FIG. 3B, the present disclosure provides a clamp connector for tightly clamping two connected pipes. The clamp connector includes a first clamp ring component 10 having a first approximately semi-circular portion and a second clamp ring component 20 having a second approximately semi-circular portion. In a practical application, a Sealing component 40 is provided between the semi-circular portions of the two clamp ring components, and when the two connected pipes are inserted, two corresponding ends of the first clamp ring component 10 and the second clamp ring component 20 are tightly locked, thereby realizing a sealing and fixing effect.

The first clamp ring component 10 includes a first end portion 11 and a second end portion 12. The first end portion 11 is provided with two stress structures 111, 112. The open mounting space 113 is provided between the two stress structures 111, 112.

The second clamp ring component 20 includes a third end portion 21 and a fourth end portion 22. The third end portion 21 is provided with the fixing structure 211 capable of being mounted in or dismounted from the mounting space 113, and the fixing structure is fitted with the two stress structures 111, 112.

Both the second end portion 12 of the first clamp ring component 10 and the fourth end portion 22 of the second clamp ring component 20 are provided with mechanisms fitted with each other for locking, and when the second end portion 12 and the fourth end portion 22 are tightly locked, the two stress structures 111, 112 and the fixing structure 211 are in a squeezed and close fit state.

The first end portion 11 and the third end portion 21 form a pre-fitting structure. In a practical application, the first end portion 11 and the third end portion 21 are pre-mounted first. The second end portion 12 and the fourth end portion 22 are in a relatively free state, namely, the second end portion 12 and the fourth end portion 22 can be freely rotated by a certain angle for conveniently connecting the connected pipes. After the connected pipes are connected, the second end portion 12 and the fourth end portion 22 are tightly locked. At that time, the two stress structures 111, 112 and the fixing structure 211 are in a squeezed and close fit state, and the first end portion 11 and the third end portion 21 correspondingly present a tightly locked state.

As for the second end portion 12 of the first clamp ring component 10 and the fourth end portion 22 of the second clamp ring component 20, those skilled in the art can adaptively use a locking mechanism such as the existing structure of a bolt and a bolt hole. Since the locking of the second end portion 12 and the fourth end portion 22 are not a main point of the present disclosure, it will not be described here.

The first clamp ring component 10 is provided with a first support edge 103 and a second support edge 104 protruding radially outwards between the first end portion 11 and the second end portion 12. The first support edge 103 and second support edge 104 are arranged parallel to each other and form a groove between them. Similarly, the second clamp ring component 20 is provided with a third support edge 203 and a fourth support edge 204 protruding radially outwards between the third end portion 21 and the fourth end portion 22. The third support edge 203 and the fourth support edge 204 are arranged parallel to each other and form a groove between them.

In one embodiment according to the present disclosure, the mounting space 113 is a U-shaped structure. Since the mounting structure is open, the clamp connector of the present disclosure can save a certain amount of raw material. On the other hand, a body of the first clamp ring component 10 and the two stress structures 111, 112 can be integrally formed into one piece by employing a sand mold. The groove is formed without a mold core, saving the cost of producing the mold core, simplifying the manufacture process, and meanwhile ensuring a location degree of the mounting space 113 well.

In the above embodiment, the fixing structure 211 includes the inserting component 212 and the limiting mechanism 213 provided at an end of the inserting component 212. A width of the inserting component 212 is slightly less than a width of the mounting space 113, so that the inserting component 212 can be conveniently provided in the mounting space 113, and the stability is ensured. In the meantime, a width of the limiting mechanism 213 is larger than the width of the mounting space 113, so that the limiting mechanism 213 can keep its position relatively unchanged and exert a limiting effect when the two stress structures 111, 112 interact with the limiting mechanism 213 by a relatively large force.

In one embodiment, in order to ensure sufficient stress intensities of the limiting mechanism 213 and the two stress structures 111, 112, edges of the limiting mechanism 213 of the present disclosure are designed to substantially coincide with outer edges of the two stress structures 111, 112.

In another embodiment, the edges of the limiting mechanism 213 are located at interiors of the outer edges of the two stress structures 111, 112. The setting relates to the material and thickness of the limiting mechanism 213, as long as the limiting mechanism can bear corresponding stress.

The inserting component 212 and the limiting mechanism 213 are integrally formed into one piece, and an included angle between the inserting component 212 and the limiting mechanism 213 is slightly larger than 90°. As one of the preferred options, the included angle between the inserting component 212 and the limiting mechanism 213 ranges from 97° to 115°. For example, the included angle of 105° is the best option. As for the setting of the angle, considering a pressure direction when clamped and a convenience of mounting and dismounting, a shape having the included angle of slightly larger than 90° can bear larger pressure. If the angle is overlarge, then the stress is not stable. Thus, the included angle is set from 97° to 115° accordingly. During the inventor's test process, when the included angle between the two components is set to be 105°, the clamp connector of the present disclosure has a better stability and convenience of mounting and dismounting.

When the fourth end portion 22 is released from a locked state, the end portion can be rotated to an effective position to make the fixing structure 211 detach from the mounting space 113.

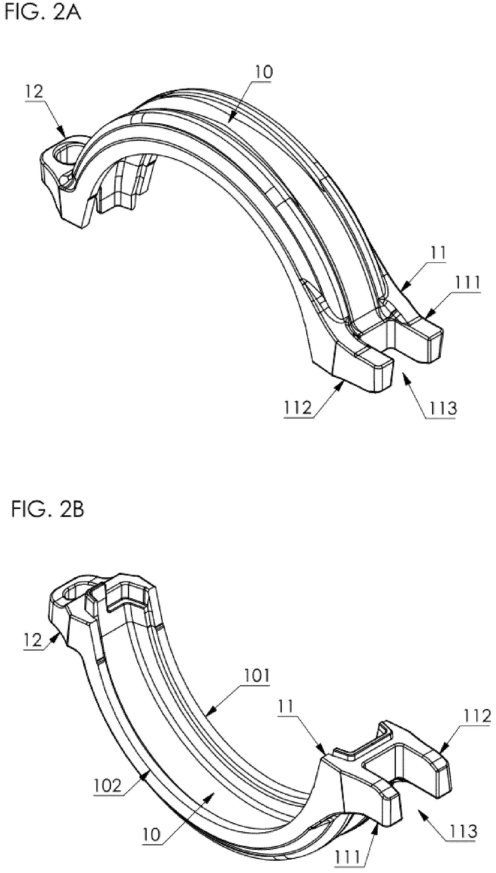

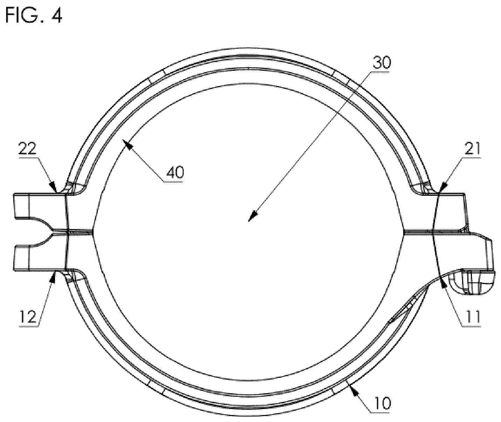

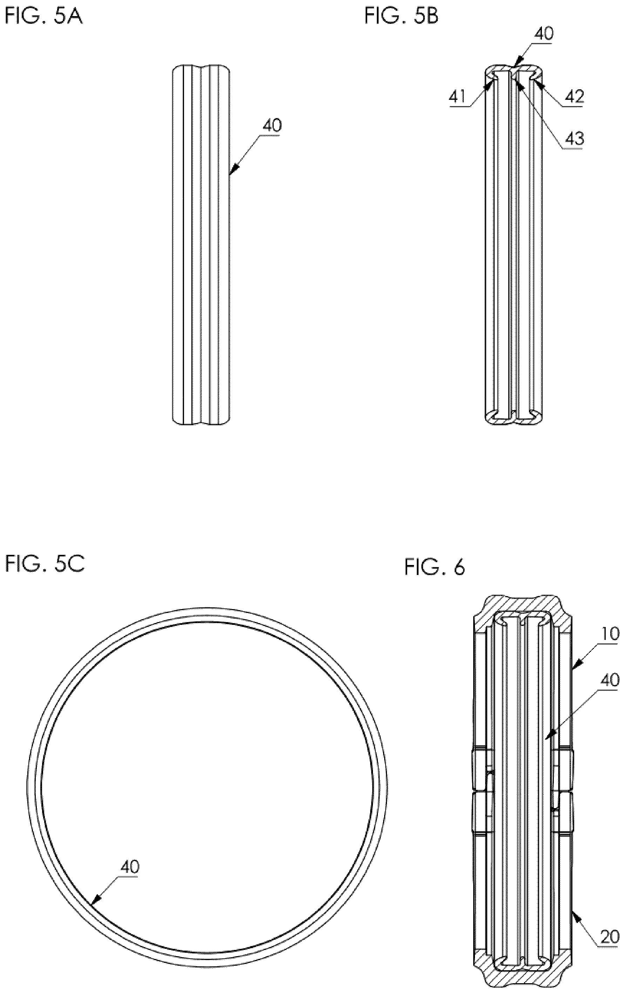

According to FIG. 2B, FIG. 3B, and FIG. 4-FIG. 6, two ends of the sealing component 40 are respectively provided with the first sealing ring 41 and the second sealing ring 42, and the first sealing ring 41 and the second sealing ring 42 tilt inward along an axis direction of the accommodating cavity 30. When connected pipe heads are inserted in the first sealing ring 41 and the second sealing ring 42, the first sealing ring 41 and the second sealing ring 42 can tightly fit with the connected pipes and ensure the sealing property.

The third sealing ring 43 is provided at a middle position of the sealing component 40, a fifth end portion of the sealing ring 43, a sixth end portion of the first sealing ring 41 and a seventh end portion of the second sealing ring 42 are on a same annular surface, namely, the third sealing ring 43, the first sealing ring 41 and the second sealing ring 42 have a same inner diameter. The third sealing ring 43 is generally located at a joint of the connected pipes, and the fifth end portion of the third sealing ring 43 in a free state, the sixth end portion of the first sealing ring 41 and the seventh end portion of the second sealing ring 42 are located on a same horizontal plane. When the connected pipes are inserted, the sealing property at the joint is further ensured. Based on the above-mentioned structure of the sealing component 40, the technical solution of the present disclosure can realize a quick insertion, and has a relatively high inserting and mounting efficiency.

The present disclosure is flexible in mounting. For example, the first clamp ring component 10 is placed at a bottom of the connected pipe, and then the third end portion 21 of the second clamp ring component 20 and the first end portion 11 of the first clamp ring component 10 are mounted and fitted with each other. Alternatively, the third end portion 21 is connected to the first end portion 11 in advance, making the two stress structures 111, 112 and the fixing structure in a slight pre-pressure state, then the connected pipes are inserted, the fourth end portion 22 and the second end portion 12 are locked for fixing.

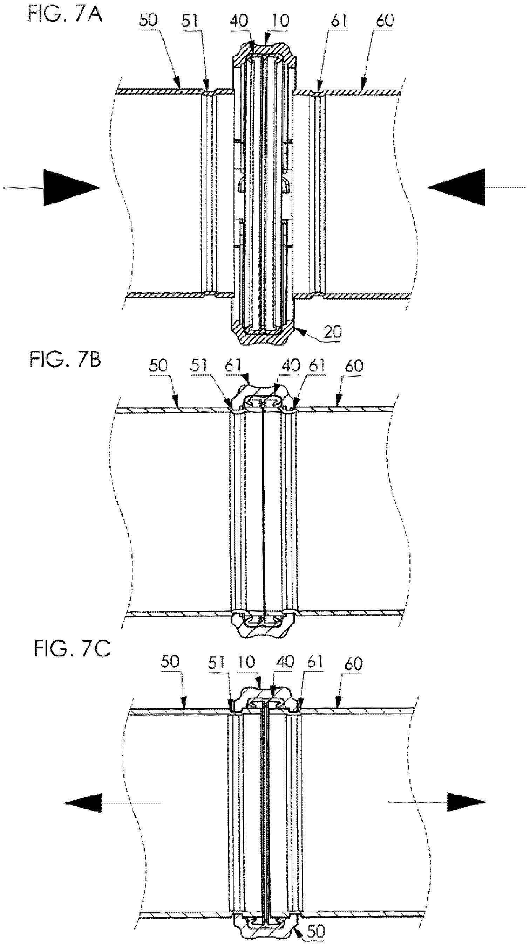

In one embodiment, according to FIG. 7A, it is an objective of the present disclosure to fixedly connect the pipe 50 to the pipe 60 and ensure the sealing property. In order to improve the fixing property, the first clamp ring component 10 is provided with the first clamp edge 101 and the second clamp edge 102 formed by bending inward along a radial direction of the clamp connector. The first clamp edge 101 and second clamp edge 102 each comprise an inner annular surface extending in a radial direction and perpendicular to the central axis of the clamp connector. The second clamp ring component 20 is provided with the third clamp edge 201 and the fourth clamp edge 202 formed by bending inward along a radial direction of the clamp connector. The third clamp edge 201 and fourth clamp edge 202 each comprise an inner annular surface extending in a radial direction and perpendicular to the central axis of the clamp connector. The end surfaces of the first, second, third and fourth clamp edges are slightly lower than an inner annular surface of the sealing component to ensure a close fit between the clamp edges and the sealing component. Accordingly, the pipe 50 is provided with the clamp groove 51 fitting with the clamp edges at the outer edges of the first clamp ring component 10 and the second clamp ring component 20, and the pipe 60 is provided with the clamp groove 61 fitting with the clamp edges at the outer edges of the first clamp ring component 10 and the second clamp ring component 20. During the mounting, the pipe 50 or the pipe 60 is inserted into the sealing component 40 along an arrow direction. Since both the inner diameters of the first sealing ring 41 and the second sealing ring and the inner diameter of the third sealing ring 43 are slightly less than an outer diameter of the pipe 50 or 60, a sealing structure is formed when the pipe 50 is inserted into the sealing component 40.

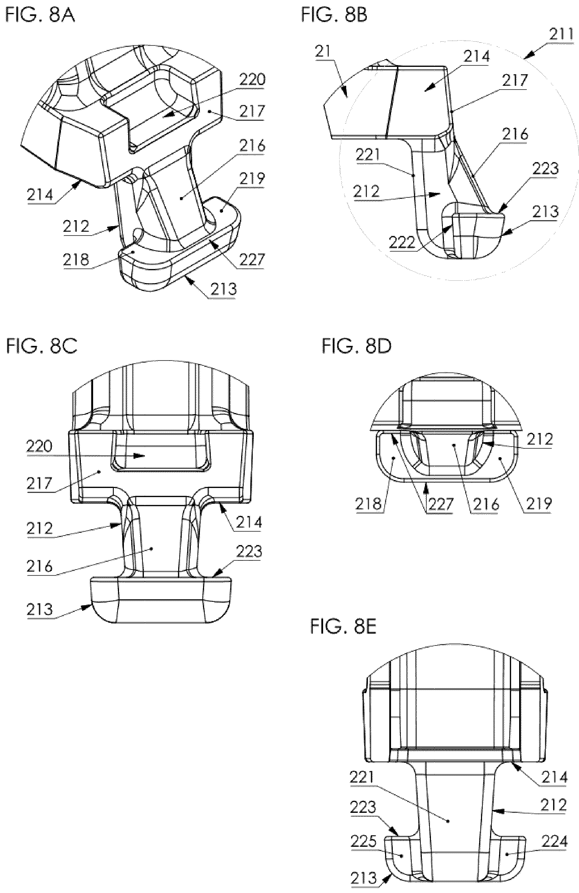

Subsequently, the clamp groove 51 corresponding to the pipe 50 is adaptively placed on the second clamp edge 102 and the fourth clamp edge 202 of the corresponding clamp connector. Then the other pipe 60 is correspondingly inserted, pre-forming a sealing structure with the sealing component 40. Subsequently, the clamp groove 61 corresponding to the pipe 60 is adaptively placed on the first clamp edge 101 and the third clamp edge 201 of the corresponding clamp connector. At last, the second end portion 12 and the fourth end portion 22 is tightly locked for fixing, according to FIG. 7B. Since the pipes 50 and 60 of the present disclosure have already pre-formed the sealing structure with the sealing component 40, only a relatively small force applied by the clamp connector to an outer ring surface of the sealing component is required, after the two end portions of the clamp connector are tightly locked. Likewise, the third sealing ring 43 is located at a joint of the pipe 50 and the pipe 60, and the pipe 50 is connected to the pipe 60 at the joint, making the sealing ring in a compressed state to form the sealing structure. In this way, the present disclosure exceedingly improves the sealing property and facilitates the mounting. If the pipe 50 and the pipe 60 are required to be disconnected, only the third end portion 21 and the fourth end portion 22 need to be released for taking out the two pipes along directions shown in FIG. 7C, realizing a quick insertion and release. FIGS. 8A to 8E show a preferred embodiment of the third end portion 21 from different perspectives. The fixing structure 211 of this embodiment has a base portion 214 with a u-shaped front surface 217 facing radially outwards. Towards the second semi-circular portion, the front surface 217 of the fixing structure 211 partially encloses a relief recess 220, which is formed by a recess in the base portion 214. The relief recess 220 of this embodiment has a surface extending radially outwards and connecting to the front surface 217. The fixing structure 211 comprises an inserting component 212 extending approximately tangentially from the base portion 214 and engaging the limiting mechanism 213. The inserting component 212 has an angled surface 216, which connects to the front surface 217 and to the limiting mechanism 213 via a rounded edge each. The angled surface 216 faces approximately radially outwards with an angle relative to the front surface 217. In this embodiment the including angle between both surfaces is about 160°. The inserting component 212 has a first and a second side surface connecting to and being arranged approximately perpendicular to the angled surface 216. The first and second side surfaces are not parallel but are arranged at an angle such that the width of the inserting component 212, between the side surfaces, increases from radially outwards to radially inwards. Further, the thickness of the inserting component 212 increases along its radial direction.

The limiting mechanism 213 has a top portion 223 located at a tangential end towards the base portion 214, with the top portion 223 having a flat first surface 218 and a flat second surface 219 facing the base portion 214. The top portion 223 further has a circumferential edge 227, surrounding the top portion. The circumferential edge 227 is engulfed by the inserting component 212 in radial outwards facing areas. In this embodiment, these first and second surfaces are connected and together form a u-shaped surface. The limiting mechanism 213 further has a rear portion 222 located at its radially inwards end, with the rear portion 222 having a first rear surface 224 and a second rear surface 225 facing radially inwards.

The inserting component 212 engages both the rear portion 222 and the top portion 223 of the limiting mechanism 213. The inserting component 212 covers more than three quarters of the top portions 223 width in radial outwards direction. The inserting component 212 engages the angled surface 216 at the top portion 223 of the limiting mechanism 213 between the first and second surface 218, 219, limiting and separating the first and second surface 218, 219. The rear portion 222 has a radially inwards facing curved surface 221, connecting the base portion 214 over an approximately 90-degree curve with the rear portion 222 of the limiting mechanism 213. The transition from the inserting component 212 to the limiting mechanism 213 is formed by a rounded edge at both the rear portion 222 and top portion 223.

The base portion 214 of the fixing structure 211 follows a trapezoid shape, with the front surface 217 having a smaller total width at its end towards the inserting component 212 than at its end facing away from the inserting component 212, with an including angle between non-parallel sides of the trapezoid shape of 8 °.

The inserting component 212 narrows from an end directed towards the base portion 214 to an end directed towards the limiting mechanism 213. The inserting component 212 engages the rear portion 222 of the limiting mechanism 213 across the full tangential width of the limiting mechanism 213.

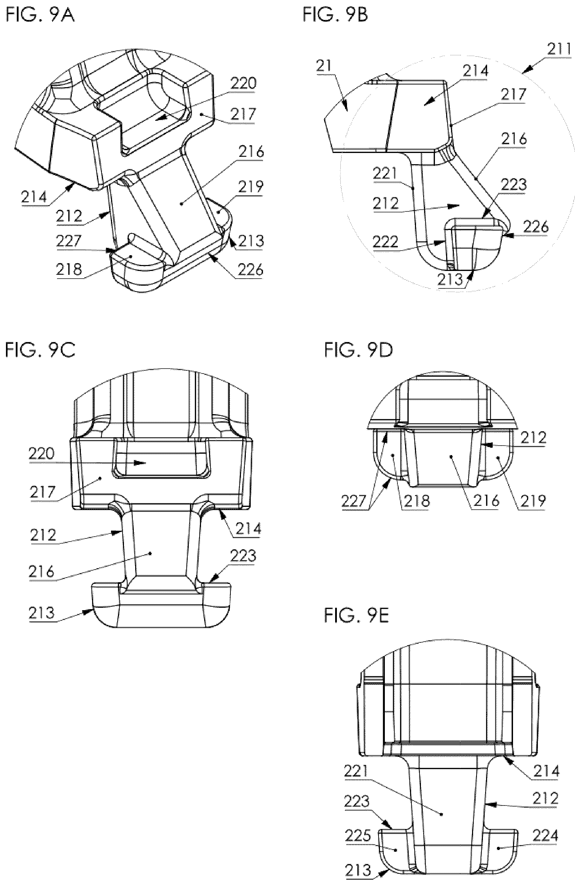

FIGS. 9A to 9E show an alternative embodiment as per FGS 8A to 8E with the following difference: The inserting component 212 engulfs the circumferential edge 227 is by more than half of its radial outwards and inwards facing edges. The angled surface 216 engages the front portion 226 of the limiting mechanism 213 with an overhang, having its connection to the top portion between the first and second surface 218, 219, covering the full width of the top portion 223 in radial outwards direction limiting and separating the first and second surface 218, 219 such as they are not connected to each other.

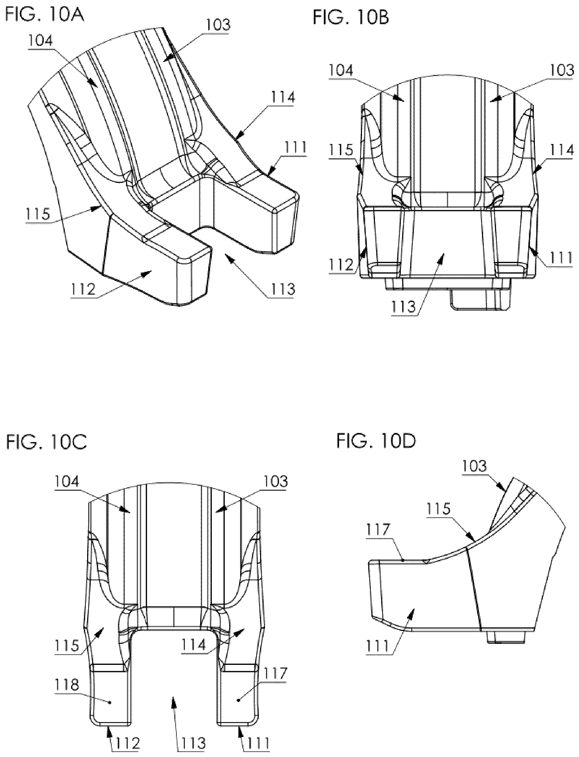

FIGS. 10A to 10F show a preferred embodiment of the first end portion 11 with the first and second stress structures 111, 112. The first end portion 11 has a first concave strengthening portion 114 extending from the first support edge 103 to the first stress structure 111, and a second concave strengthening portion 115 extending from the second support edge 104 to the second stress structure 112. The first and second concave strengthening portions 114, 115 are separated by a recessed connection having a reduced radial thickness compared to the concave strengthening portions 114, 115. The radially outwards parts of the first and second concave strengthening portions 114, 115 are separated by the open mounting space 113.

The first concave strengthening portion 114 is located axially outwards from the first support edge 103, connecting to said first support edge 103. On the other axial end of the first end portion 11, the second concave strengthening portion 115 is located axially outwards from, and extends to, the second support edge 104. The two stress structures 111 or 112 at the end of the first end portion 11 are separated by the open mounting space 113. The axial inner surfaces of the open mounting space 113 are arranged at an angle of 8 ° to each other with a reduced distance to each other at their tangential ends towards the first and second support edges 103, 104.

The first and second stress structures 111, 112 each have a flat top surface 117, 118. The top surfaces 117, 118 are formed to fit in a flush with the first and second surface 218, 219 of the limiting mechanism 213.

The first concave strengthening portion 115 has a curvature with a radius of about 0.33 of the inner radius of the clamp connector. The second concave strengthening portion 112 has a curvature with the same radius as the first concave strengthening portion 111. In this embodiment, the inner radius of the clamp connector is approximately 150 mm and the curvature radii of the first and second concave strengthening portions 115, 116 are slightly below 50 mm.

FIGS. 10A and 10B show the combination of the preferred embodiments according to FIGS. 8A to 8E and FIGS. 9A to 9D assembled in a locking state. The first surface 218 and second surface 219 of the limiting mechanism 213 interact in the locking state with top surface 117 of the first stress structure 111, and the top surface 118 of the second stress structure 112. The total width of the limiting mechanism 213 in axial direction is lower than the total width of the two stress structures 111, 112 in axial direction across the top surfaces 117, 118. The side surfaces of the fixing structure 211 and the third end portion 21 create a concave curvature with the side surfaces of the stress structures 111 or 112 and the first end portion 11.

Certainly, the present disclosure may have various other embodiments. Those skilled in the art can make corresponding modifications and changes according to the present disclosure, without departing from the spirit and essence of the present disclosure. Those corresponding modifications and changes should be considered as falling within the protective scope defined by the appended claims of the present disclosure.

### REFERENCES LIST

- 10: First clamp ring component
- 11: First end portion
- 12: Second end portion
- 101: First clamp edge
- 102: Second clamp edge
- 103: First support edge
- 104: Second support edge
- 111: First stress structure
- 112: Second stress structure
- 113: Open mounting space
- 114: First concave strengthening portion
- 115: Second concave strengthening portion
- 117: First top surface
- 118: Second top surface
- 20: Second clamp ring component
- 21: Third end portion
- 22: Fourth end portion
- 201: Third clamp edge
- 202: Fourth clamp edge
- 203: Third support edge
- 204: Fourth support edge
- 211: Fixing structure
- 212: Inserting component
- 213: Limiting mechanism
- 214: Base portion
- 216: Angled surface
- 217: Front surface
- 218: First flat surface
- 219: Second flat surface
- 220: Relief recess
- 221: Inwards facing curved surface
- 222: Rear portion
- 223: Top portion
- 224: First rear surface
- 225: Second rear surface
- 226: Front portion
- 227: Circumferential edge
- 30: Accommodating cavity
- 40: Sealing component
- 41: First sealing ring
- 42: Second sealing ring
- 43: Third Sealing ring
- 50: First pipe
- 60: Second pipe
- 51: First clamp groove
- 61: Second clamp groove

## Claims

1. A clamp connector for clamping two connected pipes, comprising:
a first clamp ring component (10), wherein the clamp ring component comprises a first end portion (11) and a second end portion (12), the first end portion (11) is provided with two stress structures, and an open mounting space is provided between the two stress structures (111), (112), the first clamp ring component (10) is provided with a first clamp edge (101) and a second clamp edge (102), the first clamp edge (101) and the second clamp edge (102) are formed by bending inward along a radial direction of the clamp connector;
a second clamp ring component (20), wherein the second clamp ring component (20) comprises a third end portion (21) and a fourth end portion (22), the third end portion (21) is provided with a fixing structure (211), the fixing structure (211) is mounted in or
dismounted from the open mounting space (113), and the fixing structure (213) fits with the two stress structures (111), (112), the second clamp ring component (20) is provided with a third clamp edge (201) and a fourth clamp edge (202), the third clamp edge (201) and the fourth clamp edge (202) are formed by bending inward along the radial direction of the clamp connector; and wherein the fixing structure (211) comprises an inserting component (212) and a limiting mechanism (213) provided at an end of the inserting component (212), the limiting mechanism (213) having a radially inwards facing rear portion (222) and a top portion (223) with an circumferential edge adjacent the inserting component (212), the top portion (223) with a first surface (218) and a second surface (219), a width of the inserting component (212) is less than a width of the open mounting space (113), and a width of the limiting mechanism (212) is larger than the width of the mounting space (113);
when the first clamp ring component (10) and the second clamp ring component (20) forms a ring, the inserting component (212) is placed in the open mounting space (213), a first surface (218) of the top portion (223) touches one of the two stress structures (111), (112), and a second surface (219) of the top portion (223) touches the other stress structure (111) or (112), wherein the first surface and the second surface (218), (219) are flat surfaces; and
both the second end portion (12) of the first clamp ring component (10) and the fourth end portion (21) of the second clamp ring component (20) are provided with mechanisms fitted with each other for locking, and when the second end portion (12) is pressed against the fourth end portion (22) to create a locked state, the first surface becomes (218) a first flush surface against the one of the two stress structures (111) and the second surface (219) becomes a second flush surface against the other stress structure (112);
wherein the first clamp edge (101) and second clamp edge (102) each comprise an inner annular surface extending radially and perpendicular to a central axis of the clamp connector, and wherein the third clamp edge (201) and fourth clamp edge (202) each comprise an inner annular surface extending radially and perpendicular to the central axis of the clamp connector;
**characterized in that** the inserting component (212) engulfs at least one side, preferably two sides, of the circumferential edge (227) to engage both the rear portion and (222) and the top portion (223) between the first surface (218) and the second surface (219).

2. The clamp connector according to claim 1, wherein the inserting component (212) engulfs exactly one side of the circumferential edge (227) and covers at least half the width of the top portion (223) in radially outwards direction.

3. The clamp connector according to claim 2, wherein the inserting component (212) covers at least three quarters of the width of the top portion (223) in radial outwards direction.

4. The clamp connector according to claim 1, wherein the inserting component (212) engulfs at least two sides of the circumferential edge (227), covers the full width of the top portion (223) in radial outwards direction, and covers not more than one fourth of the front portion (226).

5. The clamp connector according to any of the preceding claims, wherein the third end portion (21) comprises a relief recess (220) opposite to the inserting component (212), preferably the relief recess (220) preferably having a trapezoid shape and originating from the radially outwards facing front surface (217), more preferably with an included angle of two opposing sides of the trapezoid relief recess (220) between 20° to 4°.

6. The clamp connector according to any of the preceding claims, wherein a first concave strengthening portion (114) extends from the first clamp ring component (10) to the first of the two stress structures (111) and a second concave strengthening portion (115) extends from the first clamp ring component (10) to the second of the two stress structures (112), preferably the open mounting space (113) separates the first and second concave strengthening portions (114), (115) extending to the two stress structures (111), (112).

7. The clamp connector according to any preceding claim, wherein the rear portion (222) has two rear surfaces (224), (225) facing radially inwards and the inserting component (212) engages the rear portion (222) between the two rear surfaces (224), (225).

8. The clamp connector according to any preceding claim, wherein the open mounting space (113) is a U-shaped structure.

9. The clamp connector according to any preceding claim, wherein when the second end portion (12) is released from a locked state by being rotated to an effective position to make the fixing structure (211) detach from the open mounting space (113).

10. The clamp connector according to any preceding claim, wherein the inserting component (212) and the limiting mechanism (213) are integrally formed into one piece, and an included angle between the inserting component (212) and the limiting mechanism (213) is larger than 90°, preferably an included angle between the inserting component (212) and the limiting mechanism (213) ranges from 97° to 115°.

11. The clamp connector according to any of claims 1 to 10, wherein edges of the limiting mechanism (213) are located at interiors of outer edges of the two stress structures (111), (112) or wherein edges of the limiting mechanism (213) coincide with outer edges of the two stress structures (111), (112).

12. A connecting component comprising the clamp connector according to any of claims 1 to 11, wherein the clamp connector further comprises an accommodating cavity (30), the connecting component further comprises an elastic sealing component (40) provided in the accommodating cavity (30), two ends of the sealing component (40) are respectively provided with a first sealing ring (41) and a second sealing ring (42), the first sealing ring (41) and the second sealing ring (42) tilt inward along an axis direction of the accommodating cavity.

13. The connecting component according to claim 12, wherein a third sealing ring is provided at a middle position of the sealing component (40), a fifth end portion of the sealing ring, a sixth end portion of the first sealing ring (41) and a seventh end portion of the second sealing ring (42) have a same inner diameter; and inner diameters of the first sealing ring (41) and the second sealing ring (42) and the third sealing ring (43) are less than an outer diameter of each of the two connected pipes.
